# EUROPÄISCHE PATENTSCHRIFT

(11) **EP 3 808 824 B1**
(45) Veröffentlichungstag und Bekanntmachung des Hinweises auf die Patenterteilung: **25.01.2023**
(21) Anmeldenummer: 20202143.2
(22) Anmeldetag: 15.10.2020
(51) Int. Cl.: C09D 11/00, C09D 11/0235

(54) **WÄSSRIGE TINTEN- ODER LACKZUSAMMENSETZUNG, INSBESONDERE ZUM BESCHICHTEN ODER BEDRUCKEN EINES SUBSTRATS**
AQUEOUS INK OR LACQUER COMPOSITION, IN PARTICULAR FOR COATING OR PRINTING A SUBSTRATE
COMPOSITION AQUEUSE D'ENCRE OU DE VERNIS, EN PARTICULIER DESTINÉE AU REVÊTEMENT OU À L'IMPRESSION D'UN SUBSTRAT

(30) Priorität: 17.10.2019 DE 102019216004
(43) Veröffentlichungstag der Anmeldung: 21.04.2021
(73) Patentinhaber: Marabu GmbH & Co. KG, 71732 Tamm (DE)
(72) Erfinder: Engel, Stefan, 90607 Rückersdorf (DE); Sommerluksch, Jochen, 73277 Owen (DE); Zelbel, Regina, 71106 Magstadt (DE); Kücük, Rabia, 71665 Vaihingen/Enz (DE)
(74) Vertreter: Patentanwälte Ruff, Wilhelm, Beier, Dauster & Partner mbB

(56) Entgegenhaltungen:
- WO-A1-95/28436
- GB-A- 2 457 241
- US-A- 5 368 843
- US-A1- 2005 148 685
- US-A1- 2006 074 145
- US-A1- 2007 245 925
- US-B1- 6 933 014

## Beschreibung

### ANWENDUNGSGEBIET UND STAND DER TECHNIK

Die Erfindung betrifft eine wässrige Tinten- oder Lackzusammensetzung, insbesondere zum Beschichten oder Bedrucken eines Substrats, ein Verfahren zum Beschichten oder Bedrucken eines Substrats, ein mit der Tinten- oder Lackzusammensetzung wenigstens teilweise beschichtetes oder bedrucktes Substrat, einen Tintensatz sowie die Verwendung der wässrigen Tinten- oder Lackzusammensetzung zum Beschichten und/oder Bedrucken eines Substrats.

Zur Viskositätseinstellung wässriger Tintenzusammensetzungen kommen in der Regel sogenannte Verdickungsmittel zum Einsatz. Entsprechende Tintenzusammensetzungen sind beispielsweise aus der EP 2 046 902 B1 sowie DE 602 15 508 T2 bekannt. Aus der GB 2457241 A ist eine Tinten- oder Lackzusammensetzung bekannt, die ein Polymer oder Harz und zudem Verdickungsmittel auf Basis von Polyurethanharnstoff aufweisen kann. Die US 6,933,014 B1 beschreibt eine Tinte, die als filmbildende Polymere neben Polysacchariden oder Polysaccharidderivaten auch Polyurethane oder acrylische Polymere aufweisen kann. Aus der US 2006/074145 A1, US 2005/148685 A1, US 2007/245925 A1 und US 5 368 843 A sind Zusammensetzungen bekannt, die als Verdickungsmitteln polymere Verdickungsmittel, Verdickerharze, Stärken, Dextrine, Latexpolymere, Cellulosen, Polyvinylalkohole, Xanthangummi und vernetztes Acrylpolymer aufweisen. Die WO 95/28436 A1 offenbart eine Tintenzusammensetzung, die als Bindemittel ein wasserlösliches Polymer aufweist.

Nachteilig ist, dass für eine spürbare Viskositätsbeeinflussung wässriger Tintenzusammensetzungen mit hohen Mengen an Verdickungsmittel gearbeitet werden muss. Dies führt in der Regel zu einer Beeinträchtigung der Eigenschaften der Tintenzusammensetzungen. Beispielsweise kann ein hoher Verdickungsmittelanteil dazu führen, dass sich das Startverhalten von Druckköpfen durch Ablagerungen der Tintenzusammensetzungen an den Druckköpfen verschlechtert und die Tintenzusammensetzungen eine verringerte Reibfestigkeit auf einem beschichteten oder bedruckten Substrat besitzen.

Um den vorstehend beschriebenen Nachteilen entgegenzutreten, weisen die Tintenzusammensetzungen oftmals einen hohen Anteil an organischen Lösungsmitteln auf. Allerdings verlängern sich hierdurch häufig die Trocknungszeiten der Tintenzusammensetzungen. Ferner sind hohe Anteile organischer Lösungsmittel auch unter Umweltgesichtspunkten zunehmend unerwünscht.

### AUFGABE UND LÖSUNG

Die Erfindung stellt sich daher die Aufgabe, eine wässrige Tinten- oder Lackzusammensetzung bereitzustellen, welche im Zusammenhang von konventionellen wässrigen Tinten- oder Lackzusammensetzungen bekannte Nachteile wenigstens teilweise vermeidet. Ferner stellt sich die Erfindung die Aufgabe, ein Verfahren zum Beschichten oder Bedrucken eines Substrats, ein wenigstens teilweise mit der wässrigen Tinten- oder Lackzusammensetzung beschichtetes Substrat, einen Tintensatz sowie eine Verwendung der wässrigen Tinten- oder Lackzusammensetzung bereitzustellen.

Diese Aufgaben werden gelöst durch eine wässrige Tinten- oder Lackzusammensetzung gemäß unabhängigem Anspruch 1, durch ein Verfahren zum Beschichten oder Bedrucken eines Substrats gemäß Anspruch 12, durch ein Substrat gemäß Anspruch 13 sowie durch einen Tintensatz gemäß Anspruch 14. Bevorzugte Ausgestaltungen der Erfindung sind in den abhängigen Ansprüchen sowie in der Beschreibung definiert. Der Wortlaut sämtlicher Ansprüche wird hiermit durch ausdrückliche Bezugnahme zum Inhalt der vorliegenden Beschreibung gemacht.

Gemäß einem ersten Aspekt betrifft die Erfindung eine wässrige Tinten- oder Lackzusammensetzung, insbesondere zum Beschichten oder Bedrucken, vorzugsweise Digitalbedrucken, eines Substrats, insbesondere einer Substratoberfläche.

Das Substrat kann beispielsweise ein Material aufweisen oder aus einem Material bestehen, welches ausgewählt ist aus der Gruppe bestehend aus Polyvinylchlorid, Polymethylmethacrylat, Polyamid, Polypropylen, Polyethylen, Acrylnitril-Butadien-Styrol-Copolymer, Polystyrol, Copolymere von wenigstens zwei der genannten Materialien und Blends, d.h. Mischungen, von wenigstens zwei der genannten Materialien.

Vorzugsweise handelt es sich bei dem Substrat um eine Folie, insbesondere Lebensmittelverpackungsfolie. Alternativ kann es sich bei dem Substrat beispielsweise um Papier, eine Kartonverpackung oder eine Tapete handeln.

Die wässrige Tinten- oder Lackzusammensetzung weist Folgendes auf:
- wenigstens ein Verdickungsmittel,
- wenigstens ein Bindemittel,
- wenigstens ein organisches Lösungsmittel und
- Wasser,

Bei dem wenigstens einen Verdickungsmittel handelt es sich um wenigstens einen Assoziativverdicker.

Bei dem wenigstens einen Bindemittel handelt es sich um eine von dem wenigstens einen Verdickungsmittel bzw. wenigstens einen Assoziativerdicker verschiedene Verbindung, welche ausgewählt ist aus der Gruppe bestehend aus Polyacrylat, Urethanacrylat, Polyurethan, Acrylnitril-Butadien-Kautschuk (NBR), Acrylnitril-Butadien-Styrol-Kautschuk (ABS), Methacrylat-Butadien-Styrol (MBS), Methylmethacrylat-Butadien-Styrol und Mischungen von wenigstens zwei der genannten Bindemittel.

Insbesondere kann es sich bei dem wenigstens einen Bindemittel um ein von dem wenigstens einen Verdickungsmittel bzw. dem Assoziativverdicker verschiedenes Polyacrylat handeln.

Unter dem Ausdruck "wässrige Tintenzusammensetzung" soll im Sinne der vorliegenden Erfindung eine wässrige, d.h. Wasser aufweisende, Lösung oder eine wässrige, d.h. Wasser aufweisende, Dispersion verstanden werden, welche wenigstens ein Farbmittel, insbesondere wenigstens einen Farbstoff und/oder wenigstens ein Pigment, aufweist. Bezüglich geeigneter Farbmittel, insbesondere geeigneter Pigmente und/der Farbstoffe, wird auf die noch im Folgenden gemachten Ausführungen Bezug genommen.

Unter dem Ausdruck "wässrige Lackzusammensetzung" soll im Sinne der vorliegenden Erfindung eine wässrige Beschichtungszusammensetzung verstanden werden, welche insbesondere zu Protektionszwecken (sogenannter Schutzlack) und/oder zu Dekorationszwecken (optische Wirkung und/oder bestimmter Farbeffekt) und/oder zu Funktionszwecken (wie beispielsweise besondere Oberflächeneigenschaften und/oder veränderte elektrische Leitfähigkeit) auf ein Substrat aufgetragen wird.

Unter dem Ausdruck "Verdickungsmittel" soll im Sinne der vorliegenden Erfindung eine Verbindung verstanden werden, welche in der Lage ist, ungebundenes Wasser, insbesondere unter/durch Quellung, insbesondere nur unter/durch Quellung, zu binden.

Unter dem Ausdruck "Assoziativverdicker" soll im Sinne der vorliegenden Erfindung ein Verdickungsmittel verstanden werden, dessen Moleküle, in der Regel Makromoleküle, hydrophobe und hydrophile Enden und/oder hydrophobe und hydrophile Seitenketten aufweisen.

Unter dem Ausdruck "Bindemittel" soll im Sinne der vorliegenden Erfindung eine Verbindung verstanden werden, welche einerseits die Bestandteile der Tinten- oder Lackzusammensetzung aneinander bindet und andererseits die Haftung zu einem Substrat, insbesondere zu einer Oberfläche eines Substrats, unterstützt.

Unter dem Ausdruck "Acrylnitril-Butadien-Kautschuk (NBR)" soll im Sinne der vorliegenden Erfindung ein Copolymer verstanden werden, welches Acrylnitril-Strukturelemente und 1,3-Butadien-Strukturelemente aufweist oder aus Acrylnitril-Strukturelementen und 1,3-Butadien-Strukturelementen besteht. Die Acrylnitril-Strukturelemente und/oder 1,3-Butadien-Strukturelemente können modifiziert, insbesondere funktionalisiert, sein. Beispielsweise können die Acrylnitril-Strukturelemente und/oder 1,3-Butadien-Strukturelemente mit Carboxylgruppen und/oder carboxylgruppenaufweisenden Substituenten modifiziert, insbesondere funktionalisiert, sein. Alternativ können die Acrylnitril-Strukturelemente und/oder 1,3-Butadien-Strukturelemente unmodifiziert sein. Geeignete Acrylnitril-Butadien-Kautschuke (NBR) im Sinne der vorliegenden Erfindung stellen beispielsweise Carboxyl-Acrylnitril-Butadien-Copolymere der Hersteller Zeon Corporation (Nipol-Serie), der Emerald Materials (Nychem-Serie) sowie der Firma Synthomer (Litex-Serie) dar.

Unter dem Ausdruck "Acrylnitril-Butadien-Styrol-Kautschuk (ABS)" soll im Sinne der vorliegenden Erfindung ein Terpolymer verstanden werden, welches Acrylnitril-Strukturelemente, Butadien-Strukturelemente und Styrol-Strukturelemente aufweist oder aus Acrylnitril-Strukturelementen, Butadien-Strukturelementen und Styrol-Strukturelementen besteht. Bevorzugt handelt es sich bei dem Acrylnitril-Butadien-Styrol-Kautschuk (ABS) im Sinne der vorliegenden Erfindung um ein thermoplastisches Terpolymer, bei welchem an eine Polybutadien-basierte Hauptkette kovalent Seitenketten aus Styrol-Acrylnitril-Copolymeren (SAN) angebunden sind. Die Acrylnitril-Strukturelemente und/oder Butadien-Strukturelemente und/oder Styrol-Strukturelemente können modifiziert, insbesondere funktionalisiert, sein. Beispielsweise können die Acrylnitril-Strukturelemente und/oder Butadien-Strukturelemente und/oder Styrol-Strukturelemente mit Carboxylgruppen und/oder Carboxylgruppen aufweisenden Substituenten modifiziert, insbesondere funktionalisiert, sein. Alternativ können die Acrylnitril-Strukturelemente und/oder Butadien-Strukturelemente und/oder Styrol-Strukturelemente unmodifiziert sein. Geeignete Acrylnitril-Butadienein-Styrol-Kautschuke (ABS) stellen beispielsweise carboxylierte Acrylnitril-Butadienein-Styrol-Copolymere von Emerald Materials (Nychem Serie) und Synthomer (Litex-Serie) dar.

Unter dem Ausdruck "Methacrylat-Butadien-Styrol (NBS)" soll im Sinne der vorliegenden Erfindung ein Copolymer verstanden werden, welches Methacrylat-Strukturelemente und Butadien-Strukturelemente aufweist oder aus Methacrylat-Strukturelementen und Butadien-Strukturelementen besteht. Die Methacrylat-Strukturelemente und/oder Butadien-Strukturelemente können modifiziert, insbesondere funktionalisiert, sein. Beispielsweise können die Methacrylat-Strukturelemente und/oder Butadien-Strukturelemente mit Carboxylgruppen und/oder Carboxylgruppen aufweisenden Substituenten modifiziert, insbesondere funktionalisiert, sein. Alternativ können die Methacrylat-Strukturelemente und/oder Butadien-Strukturelemente unmodifiziert sein. Geeignete Methacrylat-Butadien-Styrol-Copolymere stellen beispielsweise carboxylierte Methacrylat-Butadien-Styrol-Copolymere der Litex-Serie von Synthomer dar.

Unter dem Ausdruck "Methylmethacrylat-Butadien-Styrol" soll im Sinne der vorliegenden Erfindung ein Copolymer oder Kautschuk verstanden werden, welches/welcher Methylmethacrylat-Strukturelemente, Butadien-Strukturelemente und Styrol-Strukturelemente aufweist oder aus Methylmethacrylat-Strukturelementen, Butadien-Strukturelementen und Styrol-Strukturelementen besteht. Die Methylmethacrylat-Strukturelemente und/oder Butadien-Strukturelemente und/oder Styrol-Strukturelemente können modifiziert, insbesondere funktionalisiert, sein. Beispielsweise können die Methylmethacrylat-Strukturelemente und/oder Butadien-Strukturelemente und/oder Styrol-Strukturelemente Carboxylgruppen und/oder Carboxylgruppen aufweisenden Substituenten modifiziert, insbesondere funktionalisiert, sein. Alternativ können die Methylmethacrylat-Strukturelemente und/oder Butadien-Strukturelemente und/oder Styrol-Strukturelemente unmodifiziert sein.

Es konnte gezeigt werden, dass sich mit der erfindungsgemäß vorgesehenen Kombination eines Verdickungsmittels bzw. Assoziativverdickers und eines Bindemittels wässrige Tinten- oder Lackzusammensetzungen herstellen lassen, welche eine unter Verarbeitungsgesichtspunkten ausreichende Viskosität aufweisen, ohne dass etwaige thixotrope Eigenschaften der Zusammensetzungen stören. Dadurch ist insbesondere eine gute Verdruckbarkeit (problemloser Start eines Druckkopfes nach Stillstandszeiten, zuverlässige Tropfenbildung, keine Düsenausfälle im Betrieb) erzielbar.

Ferner ist von Vorteil, dass zur Viskositätseinstellung der wässrigen Tinten- oder Lackzusammensetzung lediglich geringe Mengen an Verdickungsmittel und Bindemittel benötigt werden. Dadurch kann eine Beeinträchtigung gewünschter Eigenschaften der Tinten- oder Lackzusammensetzung vermieden werden.

Ein weiterer Vorteil besteht darin, dass durch die erfindungsgemäß vorgesehene Kombination eines Verdickungsmittels und Bindemittels geringere Mengen an organischem Lösungsmittel erforderlich sind, wodurch zum einen die Trocknungszeiten der wässrigen Tinten- oder Lackzusammensetzung deutlich verkürzt werden können und zum anderen die wässrige Tinten- oder Lackzusammensetzung geringeren Umweltbedenken begegnet.

Weiterhin ist die wässrige Tinten- oder Lackzusammensetzung auch im Hinblick auf das beabsichtigte Beschichtungs- oder Bedruckungsergebnis von Vorteil und zeichnet sich insbesondere durch eine hohe mechanische und chemische Beständigkeit, insbesondere gegenüber Nass- und/oder Trockenabrieb, aus.

Ein weiterer Vorteil besteht darin, dass die erfindungsgemäß vorgesehenen Bindemittel die Viskosität der wässrigen Tinten- oder Lackzusammensetzung nicht oder nicht wesentlich ändern.

Schließlich ist von Vorteil, dass sich mit der erfindungsgemäßen wässrigen Tinten- oder Lackzusammensetzung eine Vielzahl unterschiedlicher Farben (Farbraumgröße) verdrucken lässt.

In Ausgestaltung der Erfindung steigt die Viskosität der wässrigen Tinten- oder Lackzusammensetzung mit zunehmendem Anteil des wenigstens einen Verdickungsmittels bzw. des wenigstens einen Assoziativverdickers in der wässrigen Tinten- oder Lackzusammensetzung linear, insbesondere mit einer Steigung von wenigstens zwei, an.

Der wenigstens eine Assoziativverdicker ist ein hydrophob modifiziertes Polyacrylat (HASE),
Bei dem vorgenannten hydrophob modifizierten Polyacrylat handelt es sich bevorzugt um ein hydrophob modifiziertes alkali-lösliches Emulsionspolymer.

In weiterer Ausgestaltung der Erfindung handelt es sich bei dem hydrophob modifizierten Polyacrylat um ein Copolymer, welches durch Polymerisation, nämlich Copolymerisation, eines anionischen Monomers, eines hydrophoben Monomers sowie eines nicht ionischen Monomers hergestellt ist.

Das anionische Monomer kann als polymerisierte Einheiten in dem Copolymer Carboxylatgruppen aufweisen, welche wenigstens teilweise durch Ammoniumionen und/oder Monoalkylammoniumionen und/oder Dialkylammoniumionen und/oder Trialkylammoniumionen neutralisiert vorliegen. Dadurch ist eine Verbesserung der Verträglichkeit sowie der Einarbeitkeit des Copolymers erzielbar.

Geeignete anionische Monomere für die Herstellung des Copolymers sind Monomere, welche eine negative Ladung enthalten, wenn sie in einer basischen wässrigen Lösung vorliegen.

In weiterer Ausgestaltung der Erfindung ist das anionische Monomer ausgewählt aus der Gruppe bestehend aus Acrylsäure, Methacrylsäure, Crotonsäre, Phosphoethylmethacrylat, 2-Acrylamido-2-Methyl-1-Propansulfonsäure, Natriumvinylsulfonat, Itaconsäure, Fumarsäure, Maleinsäure, Monomethylitaconat, Monomethylfumarat, Monobutylfumarat, Maleinsäureanhydrid und Kombinationen von wenigstens zwei der genannten anionischen Monomere.

Das anionische Monomer kann ferner als polymerisierte Einheiten einen Anteil von 5 Gew.-% bis 75 Gew.-%, insbesondere 10 Gew.-% bis 60 Gew.-%, bevorzugt 20 Gew.-% bis 50 Gew.-%, aufweisen, bezogen auf das Gesamtgewicht des Copolymers.

In weiterer Ausgestaltung der Erfindung ist das hydrophobe Monomer ausgewählt aus der Gruppe bestehend aus oberflächenaktive Ester, C₈-C₃₀-Alkylphenoxy(ethylenoxy)₆₋₁₀₀-ethylacrylat, C₈-C₃₀-Alkylphenoxy(ethylenoxy)₆₋₁₀₀-ethylmethacrylat, C₈-C₃₀-Alkoxy(ethylenoxy) ₆₋₅₀-ethylacrylat, C₈-C₃₀-Alkoxy(ethylenoxy)₆₋₅₀-ethylmethacrylat, C₈-C₃₀-Alkyl-phenoxyethylacrylat, C₈-C₃₀-Alkyl-phenoxyethylmethacrylat, C₈-C₃₀-Alkoxyethylacrylat, C₈-C₃₀-Alkoxyethylmethacrylat, C₁₈H₃₇(EO)₂₀-Acrylat, C₁₈H₃₇(EO)₂₀-Methacrylat, C₂₀H₂₅(EO)₂₃-Acrylat; C₂₀H₂₅(EO)₂₃-Methacrylat und Kombinationen von wenigstens zwei der genannten hydrophoben Monomere.

Das hydrophobe Monomer kann ferner als polymerisierte Einheiten einen Anteil von 1 Gew.-% bis 20 Gew.-%, insbesondere 1 Gew.-% bis 15 Gew.-%, bevorzugt 1 Gew.-% bis 10 Gew.-%, aufweisen, bezogen auf das Gesamtgewicht des Copolymers.

In weiterer Ausgestaltung der Erfindung handelt es sich bei dem nicht ionischen Monomer um ein Monomer, welches in wässriger Lösung keine positiven oder negativen Ladungen enthält. Bevorzugt weist das nicht ionische Monomer eine Kohlenstoffkette mit weniger als 8 Kohlenstoffatomen auf.

Vorzugsweise ist das nicht ionische Monomer ausgewählt aus der Gruppe bestehend aus C1- bis C7-Alkylester von Acrylsäure, C1-bis C7-Alkylester von Methacrylsäure, C2- bis C7-Hydroxyalkylester von Acrylsäure, C2- bis C7-Hydroxyalkylester von Methacrylsäure, Ethylacrylat, Ethylmethacrylat, Methylacrylat, Methylmethacrylat, 2-Ethylhexylacrylat, Butylacrylat, Butylmethacrylat, 2-Hydroxyethylacrylat, 2-Hydroxybutylmethacrylat, Styrol, Vinyltoluen, t-Butylstyrol, Isopropylstyrol, p-Chlorstyrol, Vinylacetat, Vinylbutyrat, Vinylcaprolat, Acrylonitril, Methacrylonitril, Butadien, Isopren, Vinylchlorid, Vinylidenchlorid und Kombinationen von wenigstens zwei der genannten nicht ionischen Monomere.

Das nicht ionische Monomer kann ferner als polymerisierte Einheiten einen Anteil von 30 Gew.-% bis 75 Gew.-%, insbesondere 35 Gew.-% bis 70 Gew.-%, bevorzugt 40 Gew.-% bis 65 Gew.-%, aufweisen, bezogen auf das Gesamtgewicht des Copolymers.

Alternativ kann es bevorzugt sein, wenn es sich bei dem wenigstens einen Assoziativverdicker bzw. hydrophob modifizierten Polyacrylat um einen Assoziativverdicker handelt, welcher unter der Bezeichnung "BYK LP-R21675" kommerziell erhältlich ist.

In weiterer Ausgestaltung der Erfindung handelt es sich bei dem wenigstens einen Bindemittel um ein Polyacrylat mit einem Molgewicht ≥ 10.000 g/mol, insbesondere ≥ 10.000 g/mol bis ≤ 1.000.000 g/mol, bevorzugt ≥ 10.000 g/mol bis ≤ 200.000 g/mol, besonders bevorzugt ≥ 10.000 g/mol bis ≤ 45.000 g/mol, insbesondere ≥ 25.000 g/mol bis ≤ 35.000 g/mol.

In weiterer Ausgestaltung der Erfindung handelt es sich bei dem wenigstens einen Bindemittel um ein Polyacrylat-Copolymer, insbesondere Polyacrylat-Blockcopolymer. Bevorzugt handelt es sich bei dem wenigstens einen Bindemittel um ein Polyacrylat bzw. Polyacrylat-Copolymer aus einem Ester der Acrylsäure (Polyacrylsäureester) und wenigstens einem Comonomer. Der Ester der Acrylsäure ist vorzugsweise ausgewählt aus der Gruppe bestehend aus Methylacrylat, Ethylacrylat, n-Butylacrylat, iso-Butylacrylat, tert-Butylacrylat, 2-Ethylhexylacrylat, Laurylacrylat, Stearylacrylat, Benzylacrylat und Kombinationen von wenigstens zwei der genannten Ester der Acrylsäure. Das Comonomer ist vorzugsweise ausgewählt aus der Gruppe bestehend aus Methacrylsäure, Methylmethacrylat, Butylacrylat, Acrylamid, Styrol, Acrylnitril, Vinylacetat, Vinylalkohol, Urethan und Kombinationen von wenigstens zwei der genannten Comonomere.

Bevorzugt handelt es sich bei dem wenigstens einen Bindemittel um ein unter der Bezeichnung "Joncryl 538" kommerziell erhältliches Bindemittel. Hierbei handelt es sich um ein Polyacrylat mit einem Molgewicht ≥ 200.000 g/mol, einer Viskosität (bei 25 °C, Brookfield) von 250 mPas, einem pH-Wert von 7.7, einer Dichte (bei 25 °C) von 1,05 g/cm³ sowie einer Glasübergangstemperatur (DSC) von 64 °C.

Bei dem im Zusammenhang des wenigstens einen Bindemittels genannten Polyurethan kann es sich beispielsweise um ein unter der Bezeichnung NeoRez R-650 kommerziell erhältliches Polyurethan handeln. Alternativ oder in Kombination kann es sich bei dem Polyurethan um ein Polyurethan der Takelac WS-Serie, beispielsweise um ein unter der Bezeichnung Takelac WS-4022 kommerziell erhältliches Polyurethan, handeln. Alternativ oder in Kombination kann es sich bei dem Polyurethan um ein Polyurethan der Takelac W-Serie, beispielsweise um ein unter der Bezeichnung Takelac W-5661 kommerziell erhältliches Polyurethan, handeln.

Bei dem im Zusammenhang des wenigstens einen Bindemittels genannten Urethanacrylat kann es sich beispielsweise um ein unter der Bezeichnung NeoPac E-200 kommerziell erhältliches Urethanacrylat handeln.

Die wässrige Tinten- oder Lackzusammensetzung weist ein Verhältnis des wenigstens einen Bindemittels zu dem wenigstens einen Verdickungsmittel bzw. dem wenigstens einen Assoziativverdicker von wenigstens 5:1, insbesondere 5:1 bis 20:1, insbesondere 5:1 bis 15:1, bevorzugt 5:1 bis 10:1, auf, bezogen auf den in der wässrigen Tinten- oder Lackzusammensetzung enthaltenen Festkörpergehalt des wenigstens einen Bindemittels und des wenigstens einen Verdickungsmittels (bzw. des wenigstens einen Assoziativverdickers) zusammen.

Bevorzugt weist die wässrige Tinten- oder Lackzusammensetzung neben dem erfindungsgemäß vorgesehenen Verdickungsmittel bzw. Assoziativverdicker kein weiteres Verdickungsmittel auf. Mit anderen Worten ist es bevorzugt, wenn das erfindungsgemäß vorgesehene wenigstens eine Verdickungsmittel bzw. der wenigstens eine Assoziativverdicker das einzige Verdickungsmittel der wässrige Tinten- oder Lackzusammensetzung ist.

Ferner ist es bevorzugt, dass die wässrige Tinten- oder Lackzusammensetzung neben dem erfindungsgemäß vorgesehenen Bindemittel kein weiteres Bindemittel aufweist. Mit anderen Worten ist es bevorzugt, wenn das erfindungsgemäß vorgesehene wenigstens eine Bindemittel das einzige/die einzigen Bindemittel der wässrige Tinten- oder Lackzusammensetzung ist/sind.

Bei Verwendung der in den vorherigen Absätzen beschriebenen Verdickungsmittel sowie Bindemittel kommen die Vorteile der Erfindung besonders stark zur Geltung.

Weiterhin kann die wässrige Tinten- oder Lackzusammensetzung insgesamt einen Feststoffanteil von < 12 Gew.-%, insbesondere 3 Gew.-% bis 10 Gew.-%, vorzugsweise 4 Gew.-% bis 9 Gew.-%, aufweisen, bezogen auf das Gesamtgewicht der wässrigen Tinten- oder Lackzusammensetzung. Insbesondere die in diesem Absatz beschriebenen Feststoffanteile haben den Vorteil, dass sie gewünschte Eigenschaften der wässrigen Tinten- oder Lackzusammensetzung, insbesondere sowohl hinsichtlich Verarbeitbarkeit an einem Druckkopf als auch hinsichtlich Beständigkeit gegenüber Nass- und/oder Trockenabrieb, nicht allzu sehr beeinträchtigen. Zwar wirken sich hohe Feststoffanteile prinzipiell vorteilhaft auf die Beständigkeit, jedoch nachteilig auf die Verdruckbarkeit der Tinten- oder Lackzusammensetzung aus. Umgekehrt sind niedrige Feststoffanteile zwar vorteilhaft im Hinblick auf die Verdruckbarkeit, jedoch nachteilig im Hinblick auf die Beständigkeit der Tinten- oder Lackzusammensetzung.

Bevorzugt weist das wenigstens eine Verdickungsmittel bzw. der wenigstens eine Assoziativverdicker einen Anteil von 0,01 Gew.-% bis 0,5 Gew.-%, insbesondere 0,03 Gew.-% bis 0,35 Gew.-%, vorzugsweise 0,06 Gew.-% bis 0,30 Gew.-%, auf, bezogen auf das Gesamtgewicht der wässrigen Tinten- oder Lackzusammensetzung. Insbesondere die in diesem Absatz beschriebenen Verdickungsmittelanteile haben den Vorteil, dass hierdurch gewünschte Eigenschaften der wässrigen Tinten- oder Lackzusammensetzung, insbesondere hinsichtlich Verarbeitbarkeit an einem Druckkopf und/oder Beständigkeit gegenüber Nass- und/oder Trockenabrieb, nicht oder im Wesentlichen nicht beeinträchtigt werden.

Das wenigstens eine Bindemittel weist vorzugsweise einen Anteil von 0,1 Gew.-% bis 10 Gew.-%, insbesondere 1 Gew.-% bis 5 Gew.-%, bevorzugt 1,1 Gew.-% bis 4,4 Gew.-%, auf, bezogen auf das Gesamtgewicht der wässrigen Tinten- oder Lackzusammensetzung. Insbesondere die in diesem Absatz beschriebenen Bindemittelanteile haben sich als vorteilhaft herausgestellt, um gewünschte Eigenschaften der wässrigen Tinten- oder Lackzusammensetzung, insbesondere sowohl hinsichtlich Verarbeitbarkeit an einem Druckkopf als auch hinsichtlich Beständigkeit gegenüber Nass- und/oder Trockenabrieb, nicht allzu sehr zu beeinträchtigen. Hohe Bindemittelanteile sind zwar im Hinblick auf die Beständigkeit der Tinten- oder Lackzusammensetzung von Vorteil, allerdings wirken sie sich nachteilig auf die Verdruckbarkeit der Tinten- oder Lackzusammensetzung aus. Umgekehrt sind niedrige Bindemittelanteile vorteilhaft im Hinblick auf die Verdruckbarkeit, jedoch nachteilig im Hinblick auf die Beständigkeit der Tinten- oder Lackzusammensetzung.

In weiterer Ausgestaltung der Erfindung weisen das wenigstens eine Verdickungsmittel bzw. der wenigstens eine Assoziativverdicker und das wenigstens eine Bindemittel zusammen einen Anteil von 0,1 Gew.-% bis 10 Gew.-%, insbesondere 1 Gew.-% bis 5,5 Gew.-%, vorzugsweise 1,1 Gew.-% bis 4,6 Gew.-%, auf, bezogen auf das Gesamtgewicht der wässrigen Tinten- oder Lackzusammensetzung. Insbesondere die in diesem Absatz offenbarten Gesamtanteile für das wenigstens eine Verdickungsmittel und das wenigstens eine Bindemittel haben sich als vorteilhaft herausgestellt, um Beeinträchtigungen von gewünschten Eigenschaften der wässrigen Tinten- oder Lackzusammensetzung, insbesondere hinsichtlich Verarbeitbarkeit an einem Druckkopf und/oder Beständigkeit gegenüber Nass- und/oder Trockenabrieb, zu verhindern oder im Wesentlichen zu verhindern.

Ferner kann das wenigstens eine Verdickungsmittel bzw. der wenigstens eine Assoziativverdicker einen mittleren Teilchendurchmesser von 0,01 µm bis 1 µm, insbesondere 0,02 µm bis 0,5 µm, vorzugsweise 0,05 µm bis 0,2 µm, aufweisen.

Das wenigstens eine Bindemittel kann einen mittleren Teilchendurchmesser von 0,01 µm bis 1 µm, insbesondere 0,02 µm bis 0,5 µm, vorzugsweise 0,05 µm bis 0,2 µm, aufweisen.

Ferner kann die wässrige Tinten- oder Lackzusammensetzung ein Gewichtsverhältnis des wenigstens einen Verdickungsmittels bzw. des wenigstens einen Assoziativverdickers zu dem wenigstens einen Bindemittel von 0,005 bis 0,35, insbesondere 0,01 bis 0,3, vorzugsweise 0,014 bis 0,13, aufweisen. Dadurch lässt sich mit besonderem Vorteil die Lagerstabilität der wässrigen Tinten- oder Lackzusammensetzung erhöhen. Obendrein lässt sich mit einer solchen Tinten- oder Lackzusammensetzung eine möglichst gute mechanische und chemische Beständigkeit eines getrockneten Drucks erzielen.

Vorzugsweise weist das wenigstens eine organische Lösungsmittel eine Verdunstungszahl < 5.000, insbesondere < 4.000, vorzugsweise < 2.000, auf. Im Falle eines Lösungsmittelgemisches kann eine (gemittelte) Verdunstungszahl < 2.000 bevorzugt sein.

Unter dem Ausdruck "Verdunstungszahl" soll im Sinne der vorliegenden Erfindung die Flüchtigkeit oder Volatilität des wenigstens einen organischen Lösungsmittels verstanden werden. Zur Ermittlung der Verdunstungszahl des wenigstens einen organischen Lösungsmittels wird gemäß DIN 53170 die Zeit, in welcher das wenigstens eine Lösungsmittel komplett verdunstet, mit der Zeit in Relation gesetzt, welche Diethylether (als leicht flüchtiger Bezugsstoff) zum Verdunsten benötigt. Eine hohe Verdunstungszahl bedeutet relativ langsames Verdunsten, also eine geringe Flüchtigkeit, während eine kleine Verdunstungszahl ein schnelles Verdunsten bedeutet, also eine relativ hohe Flüchtigkeit.

Ferner kann das wenigstens eine organische Lösungsmittel als solches bei 25 °C eine Viskosität > 3,5 mPas, insbesondere 4 mPas bis 15 mPas, vorzugsweise 5 mPas bis 10 mPas, aufweisen.

In weiterer Ausgestaltung der Erfindung ist das wenigstens eine organische Lösungsmittel ausgewählt aus der Gruppe bestehend aus 3-Methyl-3-Methoxybutanol (MMB), Methoxybutanol (MB), Propylenglykolmonomethylether (MP), Glykolether, 1-(2-Hydroxyethyl)-2-pyrrolidon, N-Methyl-2-pyrrolidon (NMP), N-Ethylpryrrolidon (NEP), Diethylenglycolmonobutylether, Diethylenglycolmonoethylether, Ethylenglykol, Propylenglykol, DMSO, Hexan-1,6-diol, Pentan-1,5-diol, 2-Pyrrolidon, Glycerin und Mischungen von wenigstens zwei der genannten organischen Lösungsmittel. Die in diesem Absatz beschriebenen organischen Lösungsmittel haben sich als besonders vorteilhaft im Hinblick auf die Erzielung einer ausbalancierten Trocknungszeit der wässrigen Tinten- oder Lackzusammensetzung sowie im Hinblick auf eine für das Beschichten oder Bedrucken von Substraten geeignete Filmbildung herausgestellt.

In weiterer Ausgestaltung der Erfindung weist das wenigstens eine organische Lösungsmittel einen Anteil ≤ 20 Gew.-%, insbesondere 10 Gew.-% bis 20 Gew.-%, bevorzugt 13 Gew.-% bis 18 Gew.-%, auf, bezogen auf das Gesamtgewicht der wässrigen Tinten- oder Lackzusammensetzung.

Ferner ist es bevorzugt, dass das Wasser einen höheren Anteil, bezogen auf das Gesamtgewicht der wässrigen Tinten- oder Lackzusammensetzung, aufweist als das wenigstens eine organischen Lösungsmittel.

In weiterer Ausgestaltung der Erfindung weist die wässrige Tinten- oder Lackzusammensetzung einen Wasseranteil ≥ 50 Gew.-%, insbesondere > 60 Gew.-%, bevorzugt > 70 Gew.-%, auf, bezogen auf das Gesamtgewicht der wässrigen Tinten- oder Lackzusammensetzung.

Die wässrige Tinten- oder Lackzusammensetzung kann ferner bei 20 °C und einem Gesamtfeststoffanteil von < 12 Gew.-%, insbesondere von 3 Gew.-% bis 10 Gew.-%, vorzugsweise 4 Gew.-% bis 9 Gew.-%, bezogen auf das Gesamtgewicht der wässrigen Tinten- oder Lackzusammensetzung, eine Viskosität von 1 mPas bis 40 mPas, insbesondere 2 mPas bis < 30 mPas, vorzugsweise 4 mPas bis 15 mPas, aufweisen.

Bevorzugt weist die wässrige Tinten- oder Lackzusammensetzung ferner wenigstens einen Farbstoff, insbesondere ausgewählt aus der Gruppe bestehend aus Direktfarbstoffe, Säurefarbstoffe, Reaktivfarbstoffe und Mischungen von wenigstens zwei der genannten Farbstoffe, und/oder wenigstens ein Pigment, insbesondere ausgewählt aus der Gruppe bestehend aus anorganische Pigmente, organische Pigmente, Hohlkugel-Pigmente wie polymeres Hohlkugel-Pigment, Aluminium-Pigmente wie beschichtete Aluminium-Pigmente und Mischungen von wenigstens zwei der genannten Pigmente, auf.

Die Direktfarbstoffe und/oder Säurefarbstoffe und/oder Reaktivfarbstoffe können ausgewählt sein aus der Gruppe bestehend aus Reactive Red 23, Reactive Red 180, Reactive Yellow 37, Direct Blue 86, Direct Blue 199, Direct Red 9, Direct Red 227, Direct Yellow 86, Direct Yellow 132, Direct Yellow 142, Direct Black 168, Acid Red 131, Acid Red 274, Acid Blue 198, Acid Yellow 23, Acid Black 194 und Mischungen von wenigstens zwei der genannten Direktfarbstoffe und/oder Säurefarbstoffe und/oder Reaktivfarbstoffe.

Die anorganischen Pigmente können insbesondere ausgewählt sein aus der Gruppe bestehend aus Titandioxid, Ruß, Bismutpigmente, Oxide, Hydroxide, Eisencyanblau, Ultramarin, Cadmiumpigmente, Chromatpigmente wie Chromgelb, Chromgrün oder Molybdate, Eisenoxidpigmente, Chromoxid, Mischphasenoxidpigmente wie Rinmans Grün und Mischungen von wenigstens zwei der genannten anorganischen Pigmente. Die organischen Pigmente können insbesondere ausgewählt sein aus der Gruppe bestehend aus Pigmente auf Basis von Quinacridonen, Pigmente auf Basis von Isoindolinen, Pigmente auf Basis von Isoindolinonen, Pigmente auf Basis von Phthalocyaninen, Pigmente auf Basis von Benzimidazolonen, Azopigmente, Monoazopigmente, Diazopigmente, polycyclisches Pigmente und Mischungen von wenigstens zwei der genannten organischen Pigmente.

Die beschichteten Aluminiumpigmente können beispielsweise eine phosphorhaltige und insbesondere fluorverbindungsfreie Beschichtung aufweisen.

Durch die Verwendung von beschichteten Aluminium-Pigmenten kann mit besonderem Vorteil eine wässrige Tinten- oder Lackzusammensetzung mit Metalliceffekt bereitgestellt werden.

Der wenigstens eine Farbstoff und/oder das wenigstens eine Pigment können ferner einen Anteil von 0 Gew.-% bis 15 Gew.-%, insbesondere 0,1 Gew.-% bis 15 Gew.-%, insbesondere 2 Gew.-% bis 10 Gew.-%, vorzugsweise 2,5 Gew.-% bis 7 Gew.-%, aufweisen, bezogen auf das Gesamtgewicht der wässrigen Tinten- oder Lackzusammensetzung.

In weiterer Ausgestaltung der Erfindung ist die wässrige Lackzusammensetzung pigment- und/oder farbstofffrei, insbesondere farbmittelfrei.

Die wässrige Tinten- oder Lackzusammensetzung kann ferner wenigstens einen Zusatzstoff, insbesondere ausgewählt aus der Gruppe bestehend aus wenigstens ein pH-Einstellmittel, wenigsten ein Biozid, wenigstens ein Netzmittel, wenigstens ein Entschäumer, wenigstens ein Konservierungsmittel, wenigstens ein Filmbildehilfsmittelund Mischungen von wenigstens zwei der genannten Zusatzstoffe, aufweisen.

Gemäß einem zweiten Aspekt betrifft die Erfindung ein Verfahren zum Herstellen einer wässrigen Tinten- oder Lackzusammensetzung, insbesondere gemäß erstem Erfindungsaspekt. Das Verfahren weist die folgenden Schritte auf:
a) Bereitstellen von Wasser und optional wenigstens eines organischen Lösungsmittels und
b) Zugeben wenigstens eines Bindemittels und Zugeben wenigstens eines Verdickungsmittels in Form wenigstens eines Assoziativverdickers.

Bevorzugt wird das Wasser beim Durchführen von Schritt a) in Form von entionisiertem Wasser bereitgestellt.

Ferner kann es bevorzugt sein, dass beim Durchführen von Schritt b) zuerst das wenigstens eine Bindemittel und anschließend das wenigstens eine Verdickungsmittel zugegeben wird.

Bevorzugt wird das wenigstens eine Bindemittel beim Durchführen von Schritt b) als Bestandteil einer wenigstens ein organisches Lösungsmittel enthaltenden Dispersion und/oder das wenigstens eine Verdickungsmittel als Bestandteil einer Lösung zugegeben. Dabei kann das wenigstens eine Bindemittel einen Anteil von 0,1 Gew.-% bis 10 Gew.-%, insbesondere 1 Gew.-% bis 5,5 Gew.-%, bevorzugt 1,15 Gew.-% bis 4,6 Gew.-%, aufweisen, bezogen auf das Gesamtgewicht der wässrigen Tinten- oder Lackzusammensetzung. Das wenigstens eine Verdickungsmittel kann ein Anteil von 0,1 Gew.-% bis 0,5 Gew.-%, insbesondere 0,03 Gew.-% bis 0,35 Gew.-%, bevorzugt 0,06 Gew.-% bis 0,30 Gew.-%, aufweisen, bezogen auf das Gesamtgewicht der wässrigen Tinten- oder Lackzusammensetzung.

Das Verfahren kann ferner zwischen Schritt a) und Schritt b) einen Schritt ab) Zugeben eines pH-Einstellmittels aufweisen.

Ferner kann das Verfahren einen Schritt c) Zugeben wenigstens eines Zusatzstoffes, wie beispielsweise wenigstens eines Netzmittels und/oder wenigstens eines pH-Einstellmittels und/oder wenigstens eines Konservierungsmittels und/oder wenigstens eines Entschäumers und/oder wenigstens eines Filmbildehilfsmittels und/oder wenigstens eines (weiteren) organischen Lösungsmittels und/oder wenigstens eines Farbmittels, insbesondere wenigstens eines Farbstoffes und/oder wenigstens eines Pigments, aufweisen. Bevorzugt wird beim Durchführen von Schritt c) zunächst wenigstens ein weiteres organisches Lösungsmittel und anschließend wenigstens ein Farbmittel, insbesondere wenigstens ein Farbstoff und/oder wenigstens ein Pigment, zugegeben.

Das Verfahren kann ferner einen Schritt d) weiteres Zugeben des wenigstens einen Verdickungsmittels aufweisen. Dadurch lässt sich mit besonderem Vorteil eine endgültige Viskositätseinstellung der wässrigen Tinten- oder Lackzusammensetzung erzielen.

Bezüglich weiterer Merkmale und Vorteile des Verfahrens wird vollständig auf die bisherige Beschreibung Bezug genommen. Die dort insbesondere in Bezug auf das wenigstens eine Verdickungsmittel, das wenigstens eine Bindemittel, den wenigstens einen Zusatzstoff sowie das wenigstens eine Farbmittel, insbesondere den wenigstens einen Farbstoff und/oder das wenigstens eine Pigment, beschriebenen Merkmale und Vorteile gelten sinngemäß auch für das Verfahren gemäß zweitem Erfindungsaspekt.

Gemäß einem dritten Aspekt betrifft die Erfindung ein Verfahren zum Beschichten oder Bedrucken, insbesondere Digitalbedrucken, eines Substrats, insbesondere einer Substratoberfläche, bei welchem ein Substrat, insbesondere die Oberfläche eines Substrats, mit einer wässrigen Tinten- oder Lackzusammensetzung gemäß erstem Erfindungsaspekt beschichtet oder bedruckt, insbesondere digital bedruckt, wird.

Unter dem Ausdruck "Digitaldruck" soll im Sinne der vorliegenden Erfindung ein Druckverfahren verstanden werden, bei welchem das Druckbild direkt aus einer Datei oder einem Datenstrom von einem Computer in eine Druckmaschine übertragen wird, ohne dass eine statische Druckform benutzt wird.

Bevorzugt wird die wässrige Tintenzusammensetzung mittels Tintenstrahldruck auf das Substrat, insbesondere die Oberfläche des Substrats, aufgetragen. Tintenstrahldruck (englisch: inkjet printing) ist ein Druckverfahren, bei dem kleine Tröpfchen flüssiger Tinte erzeugt und auf das entsprechende Substrat aufgebracht werden. Dabei gibt es zum einen die Möglichkeit, einen kontinuierlichen Tintenstrahl zu erzeugen (continuous inkjet, CIJ), oder zum anderen die Möglichkeit der diskontinuierlichen Erzeugung einzelner Tropfen, die nur bei Bedarf erzeugt und auf das Substrat übertragen werden (drop-on-demand, DOD).

Ferner kann es bevorzugt sein, dass die wässrige Tinten- oder Lackzusammensetzung mittels Single-Pass-Druck auf das Substrat, insbesondere die Oberfläche des Substrats, aufgetragen wird. Single-Pass-Druck ist ein Druckverfahren, bei welchem nicht bewegliche Druckköpfe über die gesamte Druckbreite angeordnet sind und das zu beschichtende oder bedruckende Substrat unter den Druckköpfen durchgeführt wird. Vorzugsweise wird die wässrige Tinten- oder Lackzusammensetzung in einem Durchgang (Pass) auf das Substrat, insbesondere die Oberfläche des Substrats, aufgetragen. Der Vorteil des Single-Pass-Drucks besteht in einer hohen Druckgeschwindigkeit und insbesondere in der Einsparung von Produktionskosten.

Bezüglich weiterer Merkmale und Vorteile des Verfahrens wird vollständig auf die bisherige Beschreibung Bezug genommen. Die dort insbesondere in Bezug auf die wässrige Tinten- oder Lackzusammensetzung beschriebenen Merkmale und Vorteile gelten sinngemäß auch für das Verfahren gemäß drittem Erfindungsaspekt.

Gemäß einem vierten Aspekt betrifft die Erfindung ein Substrat, welches wenigstens teilweise, insbesondere nur teilweise oder vollständig, mit einer wässrigen Tinten- oder Lackzusammensetzung gemäß erstem Erfindungsaspekt beschichtet oder bedruckt, insbesondere digital bedruckt, ist.

Das Substrat kann beispielsweise ein Material aufweisen oder aus einem Material bestehen, welches ausgewählt ist aus der Gruppe bestehend aus Polyvinylchlorid, Polymethylmethacrylat, Polypropylen, Polyethylen, Acrylnitril-Butadien-Styrol-Copolymer, Polystyrol, Copolymere von wenigstens zwei der genannten Materialien und Blends, d.h. Mischungen, von wenigstens zwei der genannten Materialien.

Vorzugsweise handelt es sich bei dem Substrat um eine Folie, insbesondere Lebensmittelverpackungsfolie. Alternativ kann es sich bei dem Substrat um Papier, eine Kartonverpackung oder eine Tapete handeln.

Bezüglich weiterer Merkmale und Vorteile des Substrats wird vollständig auf die im Rahmen des ersten und zweiten Erfindungsaspekts gemachten Ausführungen Bezug genommen.

Die dort insbesondere in Bezug auf die wässrige Tinten- oder Lackzusammensetzung beschriebenen Merkmale und Vorteile gelten sinngemäß auch für das Substrat gemäß viertem Erfindungsaspekt.

Gemäß einem fünften Aspekt betrifft die Erfindung einen Tintensatz, aufweisend eine oder mehrere Tintenzusammensetzungen gemäß erstem Erfindungsaspekt, wobei sich die Tintenzusammensetzungen wenigstens in Bezug auf ein Farbmittel, insbesondere einen Farbstoff und/oder ein Pigment, voneinander unterscheiden.

Bezüglich weiterer Merkmale und Vorteile des Tintensatzes wird vollständig auf die im Rahmen der bisherigen Beschreibung gemachten Ausführungen Bezug genommen. Die dort insbesondere in Bezug auf die wässrige Tinten- oder Lackzusammensetzung beschriebenen Merkmale und Vorteile, beispielsweise hinsichtlich möglicher Farbstoffe und/oder Pigmente, gelten sinngemäß auch für den Tintensatz gemäß fünftem Erfindungsaspekt.

Gemäß einem sechsten Aspekt betrifft die Erfindung die Verwendung einer wässrigen Tinten- oder Lackzusammensetzung gemäß erstem Erfindungsaspekt zum Beschichten und/oder Bedrucken, insbesondere Digitalbedrucken, eines Substrats.

Bezüglich weiterer Merkmale und Vorteile der Verwendung wird vollständig auf die im Rahmen der bisherigen Beschreibung gemachten Ausführungen Bezug genommen. Die dort insbesondere in Bezug auf die wässrige Tinten- oder Lackzusammensetzung beschriebenen Merkmale und Vorteile gelten sinngemäß auch für die Verwendung gemäß sechstem Erfindungsaspekt.

Weitere Merkmale und Vorteile der Erfindung ergeben sich aus der nachfolgenden Beschreibung von Ausführungsbeispielen. Dabei können einzelne Merkmale jeweils für sich alleine oder in Kombination miteinander verwirklicht sein. Die Ausführungsbeispiele dienen lediglich einer weiteren Erläuterung der Erfindung, ohne diese hierauf zu beschränken.

### BEISPIELTEIL

### 1. Prüfmethoden:

### 1.1 Druckstabilität:

Eine Tinte geeigneter Viskosität wurde mit Standardparametern auf einem dazu passenden Druckkopf mit einer festgelegten, gebrauchsüblichen Frequenz und Temperatur für 20 Sekunden verdruckt. Düsentests vorher und nachher erlaubten eine Bewertung der Druckstabilität.

### 1.2 Startverhalten:

Eine Tinte geeigneter Viskosität wurde mit einem dazu passenden Druckkopf kurz angedruckt (Düsentest). Nach 30 oder 60 Minuten Stillstand bei Raumtemperatur wurde der Düsentest wiederholt und auf eingetrocknete Düsen überprüft.

### 1.3 Lagerstabilität:

Die Tinte wurde bei 50 °C vier Wochen gelagert. Viskosität, Oberflächenspannung und mittlere Teilchengröße sollten sich um nicht mehr als 10 % verändert haben.

### 1.4 Chemische Beständigkeit:

Ein Reinigungsstäbchen mit Schwamm wurde mit einer Testflüssigkeit getränkt und auf einem getrockneten Rakelabzug (12 µm) der untersuchten Tinte gerieben. Die Zahl der Doppelscheuerhübe, bis der Untergrund freigelegt wurde, wurde notiert.

### 2. Beispiel einer erfindungsgemäßen Tintenzusammensetzung:

| | |
|---|---|
| VE-Wasser | 58,05 % |
| Monoethanolamin (pH-Regulator) | 0,20 % |
| Joncryl 538 (Bindemittel) | 2,5 % (entspricht 1,15 % Festkörper) |
| BYK-LP-R21675 (Verdicker) | 1,55 % (entspricht 0,23 % Festkörper) |
| Ethyldiglykol (Trocknungsverzögerer) | 15 % |
| Tensidmischung | 1,1 % |
| Biozid | 0,1 % |
| Entschäumer | 0,1 % |
| Pigmentdispersion | 21,4 % |

Die Tinte wurde auf einem Druckkopf Dimatix Samba G3L bei 24 kHz und 32 °C verdruckt. Nach 30 Minuten Betrieb konnten keine Düsenausfälle festgestellt werden (ermittelt auf dem Dropwatcher)

Startverhalten: Der o.g. Druckkopf wurde 40 Minuten nach dem Druckversuch erneut gestartet. Es konnten keine fehlenden Düsen festgestellt werden.

Lagerstabilität: Die Tinte war über einen Monat bei 50 °C stabil (< 10 % Änderung bei Viskosität, Oberflächenspannung, Teilchengröße)

Chemische Beständigkeit: Reiben mit Isopropanol-getränktem Schwamm: 100x

### 3. weiteres Beispiel einer erfindungsgemäßen Tintenzusammensetzung:

| | |
|---|---|
| VE-Wasser | 48,03 % |
| Monoethanolamin (pH-Regulator) | 0,15 % |
| Joncryl 538 (Bindemittel) | 8,7 % (entspricht 4,0 % Festkörper) |
| BYK LP-R21675 (Verdicker) | 2,5 % (entspricht 0,38 % Festkörper) |
| 2-Pyrrolidon (Trocknungsverzögerer) | 5,0 % |
| 3-Methyl-3-Methoxy-1-Butanol (Trocknungsverzögerer) | 7,0 % |
| Butyldiglykol (Trocknungsverzögerer) | 6,0 % |
| Tensidmischung | 1,12 % |
| Biozid | 0,1 % |
| Pigmentdispersion | 21,4% |

Die Tinte wurde auf einem Druckkopf Konica-Minolta 1024i MAE bei 20KHz und 26 °C verdruckt. Nach 20 Sekunden Betrieb konnten keine Düsenausfälle beobachtet werden.

Startverhalten: Der o.g. Druckkopf wurde 60 Minuten nach dem Druckversuch erneut gestartet. Es konnten keine fehlenden Düsen festgestellt werden.

Lagerstabilität: Die Tinte war über einen Monat bei 50 °C und 15 Monate bei Raumtemperatur stabil (<10% Änderung bei Viskosität, Oberflächenspannung, Teilchengröße)

Chemische Beständigkeit: Reiben mit Isopropanol-getränktem Schwamm: 100x

### 4. Gegenbeispiel: nicht erfindungsgemäße Rezeptur (Viskosität 9,5mPas, 20 °C, 511 1/s)

| | |
|---|---|
| VE-Wasser | 46,28 % |
| Monoethanolamin (pH-Regulator) | 0,1 % |
| Joncryl 538 (Bindemittel) | 8,7 % (entspricht 4,0 % Festkörper) |
| Tafigel PUR 55 (Verdicker) | 4,3 % (entspricht 0,86 % Festkörper) |
| 2-Pyrrolidon (Trocknungsverzögerer) | 5,0 % |
| 3-Methyl-3-Methoxy-1-Butanol (Trocknungsverzögerer) | 7,0 % |
| Butyldiglykol (Trocknungsverzögerer) | 6,0 % |
| Tensidmischung | 1,12 % |
| Biozid | 0,1 % |
| Pigmentdispersion | 21,4 % |

Die Tinte wurde auf einem Druckkopf Konica-Minolta 1024i MAE bei 20KHz und 26 °C verdruckt. Nach 20 Sekunden Betrieb waren 90% der Düsen ausgefallen.

Chemische Beständigkeit: Reiben mit Isopropanol-getränktem Schwamm: 5x

### 5. weiteres Gegenbeispiel: nicht erfindungsgemäße Rezeptur

| | |
|---|---|
| VE-Wasser | 37,8 % |
| Monoethanolamin (pH-Regulator) | 0,1 % |
| Joncryl 538 (Bindemittel) | 12,9 % (entspricht 5,9 % Festkörper) |
| Tego Visko Plus 3010 (Verdicker) | 10,0% (entspricht 6 % Festkörper) |
| Ethyldiglykol (Trocknungsverzögerer) | 15,0 % |
| Tensidmischung | 1,1 % |
| Biozid | 0,1 % |
| Pigmentdispersion | 22,9 % |

Die Zielviskosität von 8,03 mPas (25 °C, 511 1/s) konnte erst mit einem Verdickeranteil von 6 % (Festkörper) erreicht werden

Die Tinte wurde auf einem Druckkopf Konica-Minolta 1024i MAE bei 20KHz und 26 °C verdruckt. Nach 20 Sekunden Betrieb war ein praktisch vollständiger Düsenausfall zu verzeichnen.

Chemische Beständigkeit: Reiben mit Isopropanol getränktem Schwamm: 2x

## Patentansprüche

1. Wässrige Tinten- oder Lackzusammensetzung, insbesondere zum Beschichten oder Bedrucken eines Substrats, aufweisend
- wenigstens ein Verdickungsmittel,
- wenigstens ein Bindemittel
- wenigstens ein organisches Lösungsmittel und
- Wasser,
wobei es sich bei dem wenigstens einen Verdickungsmittel um wenigstens einen Assoziativverdicker handelt, wobei der wenigstens eine Assoziativverdicker ein hydrophob modifiziertes Polyacrylat (HASE) ist und es sich bei dem wenigstens einen Bindemittel um eine von dem wenigstens einen Assoziativverdicker verschiedene Verbindung handelt, welche ausgewählt ist aus der Gruppe bestehend aus Polyacrylat, Urethanacrylat, Polyurethan, Acrylnitril-Butadien-Kautschuk (NBR), Acrylnitril-Butadien-Styrol-Kautschuk (ABS), Methacrylat-Butadien-Styrol (MBS), Methyl-methacrylat-Butadien-Styrol und Mischungen von wenigstens zwei der genannten Bindemittel, wobei die wässrige Tinten- oder Lackzusammensetzung ein Verhältnis des wenigstens einen Bindemittels zu dem wenigstens einen Assoziativverdicker von wenigstens 5:1 aufweist, bezogen auf den in der wässrigen Tinten- oder Lackzusammensetzung enthaltenen Festkörpergehalt des wenigstens einen Bindemittels und des wenigstens einen Assoziativverdickers zusammen.

2. Wässrige Tinten- oder Lackzusammensetzung nach Anspruch 1, **dadurch gekennzeichnet, dass** die Viskosität der wässrigen Tinten- oder Lackzusammensetzung mit zunehmendem Anteil des wenigstens einen Assoziativverdickers in der wässrigen Tinten- oder Lackzusammensetzung linear, insbesondere mit einer Steigung von wenigstens zwei, ansteigt.

3. Wässrige Tinten- oder Lackzusammensetzung nach Anspruch 1 oder 2, **dadurch gekennzeichnet, dass** es sich bei dem wenigstens einen Assoziativverdicker um ein Copolymer handelt, welches durch Polymerisation eines anionischen Monomers, eines hydrophoben Monomers und eines nicht ionischen Monomers hergestellt ist.

4. Wässrige Tinten- oder Lackzusammensetzung nach Anspruchs, **dadurch gekennzeichnet, dass**
- das anionische Monomer ausgewählt ist aus der Gruppe bestehend aus Acrylsäure, Methacrylsäure, Crotonsäre, Phosphoethylmethacrylat, 2-Acrylamido-2-Methyl-1-Propansulfonsäure, Natriumvinylsulfonat, Itaconsäure, Fumarsäure, Maleinsäure, Monomethylitaconat, Monomethylfumarat, Monobutylfumarat, Maleinsäureanhydrid und Kombinationen von wenigstens zwei der genannten anionischen Monomere
und/oder
- das hydrophobe Monomer ausgewählt ist aus der Gruppe bestehend aus oberflächenaktive Ester, C₈-C₃₀-Alkylphenoxy(ethylenoxy)₆₋₁₀₀-ethylacrylat, C₈-C₃₀-Alkylphenoxy(ethylenoxy)₆₋₁₀₀-ethylmethacrylat, C₈-C₃₀-Alkoxy(ethylenoxy) ₆₋₅₀-ethylacrylat, C₈-C₃₀-Alkoxy(ethylenoxy) ₆₋₅₀-ethylmethacrylat, C₈-C₃₀-Alkyl-phenoxyethylacrylat, C₈-C₃₀-Alkyl-phenoxyethylmethacrylat, C₈-C₃₀-Alkoxyethylacrylat, C₈-C₃₀-Alkoxyethylmethacrylat, C₁₈H₃₇(EO)₂₀-Acrylat, C₁₈H₃₇(EO)₂₀-Methacrylat, C₂₀H₂₅(EO)₂₃-Acrylat; C₂₀H₂₅(EO)₂₃-Methacrylat und Kombinationen von wenigstens zwei der genannten hydrophoben Monomere
und/oder
- das nichtionische Monomer ausgewählt ist aus der Gruppe bestehend aus C1- bis C7-Alkylester von Acrylsäure, C1-bis C7-Alkylester von Methacrylsäure, C2- bis C7-Hydroxyalkylester von Acrylsäure, C2- bis C7-Hydroxyalkylester von Methacrylsäure, Ethylacrylat, Ethylmethacrylat, Methylacrylat, Methylmethacrylat, 2-Ethylhexylacrylat, Butylacrylat, Butylmethacrylat, 2-Hydroxyethylacrylat, 2-Hydroxybutylmethacrylat, Styrol, Vinyltoluen, t-Butylstyrol, Isopropylstyrol, p-Chlorstyrol, Vinylacetat, Vinylbutyrat, Vinylcaproat Acrylonitril, Methacrylonitril, Butadien, Isopren, Vinylchlorid, Vinylidenchlorid und Kombinationen von wenigstens zwei der genannten nichtionischen Monomere.

5. Wässrige Tinten- oder Lackzusammensetzung nach einem der vorhergehenden Ansprüche, **dadurch gekennzeichnet, dass** es sich bei dem wenigstens einen Bindemittel um ein Polyacrylat mit einem Molgewicht ≥ 10.000 g/mol, insbesondere ≥ 10.000 g/mol bis ≤ 1.000.000 g/mol, bevorzugt ≥ 10.000 g/mol bis ≤ 200.000 g/mol, besonders bevorzugt ≥ 10.000 g/mol bis ≤ 45.000 g/mol, insbesondere ≥ 25.000 g/mol bis ≤ 35.000 g/mol, handelt.

6. Wässrige Tinten- oder Lackzusammensetzung nach einem der vorhergehenden Ansprüche, **dadurch gekennzeichnet, dass** es sich bei dem wenigstens einen Bindemittel um ein Polyacrylat aus einem Ester der Acrylsäure und wenigstens einem Comonomer handelt, wobei der Ester der Acrylsäure vorzugsweise ausgewählt ist aus der Gruppe bestehend aus Methylacrylat, Ethylacrylat, n-Butylacrylat, iso-Butylacrylat, tert-Butylacrylat, 2-Ethylhexylacrylat, Laurylacrylat, Stearylacrylat, Benzylacrylat und Kombinationen von wenigstens zwei der genannten Ester der Acrylsäure, und/oder das wenigstens eine Comonomer vorzugsweise ausgewählt ist aus der Gruppe bestehend aus Methacrylsäure, Methylmethacrylat, Butylacrylat, Acrylamid, Styrol, Acrylnitril, Vinylacetat, Vinylalkohol, Urethan und Kombinationen von wenigstens zwei der genannten Comonomere.

7. Wässrige Tinten- oder Lackzusammensetzung nach einem der vorhergehenden Ansprüche, **dadurch gekennzeichnet, dass** der wenigstens eine Assoziativverdicker und das wenigstens eine Bindemittel zusammen einen Anteil von 0,1 Gew.-% bis 10 Gew.-%, insbesondere 1 Gew.-% bis 5,5 Gew.-%, vorzugsweise 1,1 Gew.-% bis 4,6 Gew.-%, aufweisen, bezogen auf das Gesamtgewicht der Tinten- oder Lackzusammensetzung.

8. Wässrige Tinten- oder Lackzusammensetzung nach einem der vorhergehenden Ansprüche, **dadurch gekennzeichnet, dass** die wässrige Tinten- oder Lackzusammensetzung ein Verhältnis des wenigstens einen Bindemittels zu dem wenigstens einen Assoziativverdicker von 5:1 bis 20:1, insbesondere 5:1 bis 15:1, bevorzugt 5:1 bis 10:1, aufweist, bezogen auf den in der wässrige Tinten- oder Lackzusammensetzung enthaltenen Festkörpergehalt des wenigstens einen Bindemittels und des wenigstens einen Assoziativverdickers zusammen.

9. Wässrige Tinten- oder Lackzusammensetzung nach einem der vorhergehenden Ansprüche, **dadurch gekennzeichnet, dass** das wenigstens eine organische Lösungsmittel ausgewählt ist aus der Gruppe bestehend aus 3-Methyl-3-Methoxybutanol (MMB), Methoxybutanol (MB), Propylenglykolmonomethylether (MP), Glykolether, 1-(2-Hydroxyethyl)-2-pyrrolidon, N-Methyl-2-pyrrolidon (NMP), N-Ethylpryrrolidon (NEP), Diethylenglycolmonobutylether, Diethylenglycolmonoethylether, Ethylenglykol, Propylenglykol, DMSO, Hexan-1,6-diol, Pentan-1,5-diol, 2-Pyrrolidon, Glycerin und Mischungen von wenigstens zwei der genannten organischen Lösungsmitteln.

10. Wässrige Tinten- oder Lackzusammensetzung nach einem der vorhergehenden Ansprüche, **dadurch gekennzeichnet, dass** das wenigstens eine organische Lösungsmittel einen Anteil von ≤ 20 Gew.-%, insbesondere 10 Gew.-% bis 20 Gew.-%, bevorzugt 13 Gew.-% bis 18 Gew.-%, aufweist, bezogen auf das Gesamtgewicht der Tinten- oder Lackzusammensetzung.

11. Wässrige Tinten- oder Lackzusammensetzung nach einem der vorhergehenden Ansprüche, **dadurch gekennzeichnet, dass** das Wasser einen Anteil von ≥ 50 Gew.-%, insbesondere > 60 Gew.-%, bevorzugt > 70 Gew.-%, aufweist, bezogen auf das Gesamtgewicht der Tinten- oder Lackzusammensetzung.

12. Verfahren zum Beschichten oder Bedrucken, insbesondere Digitalbedrucken, eines Substrats, bei welchem ein Substrat, insbesondere die Oberfläche eines Substrats, mit einer wässrigen Tinten- oder Lackzusammensetzung nach einem der vorhergehenden Ansprüche beschichtet oder bedruckt, insbesondere digital bedruckt, wird.

13. Substrat, **dadurch gekennzeichnet, dass** das Substrat wenigstens teilweise mit einer wässrigen Tinten- oder Lackzusammensetzung nach einem der Ansprüche 1 bis 11 beschichtet oder bedruckt, insbesondere digital bedruckt, ist.

14. Tintensatz, aufweisend eine oder mehrere Tintenzusammensetzungen nach einem der Ansprüche 1 bis 11, wobei sich die Tintenzusammensetzungen wenigstens in Bezug auf ein Farbmittel, insbesondere einen Farbstoff und/oder ein Pigment, voneinander unterscheiden.

## Claims

1. Aqueous ink or varnish composition, in particular for coating or printing a substrate, having
- at least one thickening agent,
- at least one bonding agent,
- at least one organic solvent and
- water,
where the at least one thickening agent is at least one associative thickener, the at least one associative thickener being a hydrophobically modified polyacrylate (HASE), and the at least one bonding agent is a compound differing from the at least one associative thickener and is selected from the group consisting of polyacrylate, urethane acrylate, polyurethane, acrylonitrile butadiene rubber (NBR), acrylonitrile butadiene styrene (ABS) rubber, methacrylate butadiene styrene (MBS), methyl methacrylate butadiene styrene and mixtures of at least two of the said bonding agents, the aqueous ink or varnish composition having a ratio of the at least one bonding agent to the at least one associative thickener of at least 5:1 based on the solids content, contained in the aqueous ink or varnish composition, of the at least one bonding agent and of the at least one associative thickener together.

2. Aqueous ink or varnish composition according to claim 1, **characterized in that** the viscosity of the aqueous ink or varnish composition rises linearly with an increasing proportion of the at least one associative thickener in the aqueous ink or varnish composition, in particular with a rise of at least two.

3. Aqueous ink or varnish composition according to claim 1 or 2, **characterized in that** the at least one associative thickener is a copolymer which is manufactured by polymerization of an anionic monomer, of a hydrophobic monomer and of a non-ionic monomer.

4. Aqueous ink or varnish composition according to claim 3, **characterized in that**
- the anionic monomer is selected from the group consisting of acrylic acid, methacrylic acid, crotonic acid, phosphoethyl methacrylate, 2-acrylamido-2-methyl-1-propanesulfonic acid, sodium vinyl sulfonate, itaconic acid, fumaric acid, maleic acid, monomethyl itaconate, monomethyl fumarate, monobutyl fumarate, maleic anhydride and combinations of at least two of the said anionic monomers, and/or
- the hydrophobic monomer is selected from the group consisting of surface-active ester, C₈-C₃₀ alkyl phenoxy(ethyleneoxy)₆₋₁₀₀ ethyl acrylate, C₈-C₃₀ alkyl phenoxy(ethyleneoxy)₆₋₁₀₀ ethyl methacrylate, C₈-C₃₀ alkoxy(ethyleneoxy)₆₋₅₀ ethyl acrylate, C₈-C₃₀ alkoxy(ethyleneoxy)₆₋₅₀ ethyl methacrylate, C₈-C₃₀ alkyl phenoxyethyl acrylate, C₈-C₃₀ alkyl phenoxyethyl methacrylate, C₈-C₃₀ alkoxy ethyl acrylate, C₈-C₃₀ alkoxy ethyl methacrylate, C₁₈H₃₇(EO)₂₀ acrylate, C₁₈H₃₇(EO)₂₀ methacrylate, C₂₀H₂₅(EO)₂₃ acrylate; C₂₀H₂₅(EO)₂₃ methacrylate and combinations of at least two of the said hydrophobic monomers,
and/or
- the non-ionic monomer is selected from the group consisting of C1 to C7 alkyl ester of acrylic acid, C1 to C7 alkyl ester of methacrylic acid, C2 to C7 hydroxy alkyl ester of acrylic acid, C2 to C7 hydroxy alkyl ester of methacrylic acid, ethyl acrylate, ethyl methacrylate, methyl acrylate, methyl methacrylate, 2-ethylhexyl acrylate, butyl acrylate, butyl methacrylate, 2-hydroxyethyl acrylate, 2-hydroxybutyl methacrylate, styrene, vinyl toluene, t-butyl styrene, isopropyl styrene, p-chlorostyrene, vinyl acetate, vinyl butyrate, vinyl caproate, acrylonitrile, methacrylonitrile, butadiene, isoprene, vinyl chloride, vinylidene chloride and combinations of at least two of the said non-ionic monomers.

5. Aqueous ink or varnish composition according to any of the preceding claims, **characterized in that** the at least one bonding agent is a polyacrylate with a molecular weight of ≥ 10,000 g/mol, in particular ≥ 10,000 g/mol to ≤ 1,000,000 g/mol, preferably ≥ 10,000 g/mol to ≤ 200,000 g/mol, particularly preferably ≥ 10,000 g/mol to ≤ 45,000 g/mol, in particular ≥ 25,000 g/mol to ≤ 35,000 g/mol.

6. Aqueous ink or varnish composition according to any of the preceding claims, **characterized in that** the at least one bonding agent is a polyacrylate from an ester of acrylic acid and at least one comonomer, the ester of acrylic acid preferably being selected from the group consisting of methyl acrylate, ethyl acrylate, n-butyl acrylate, iso-butyl acrylate, tert-butyl acrylate, 2-ethylhexyl acrylate, lauryl acrylate, stearyl acrylate, benzyl acrylate and combinations of at least two of the said esters of acrylic acid, and/or the at least one comonomer is preferably selected from the group consisting of methacrylic acid, methyl methacrylate, butyl acrylate, acrylamide, styrene, acrylonitrile, vinyl acetate, vinyl alcohol, urethane and combinations of at least two of the said comonomers.

7. Aqueous ink or varnish composition according to any of the preceding claims, **characterized in that** the at least one associative thickener and the at least one bonding agent together have a proportion of 0.1 % by wt. to 10 % by wt., in particular 1 % by wt. to 5.5 % by wt., preferably 1.1 % by wt. to 4.6 % by wt. based on the total weight of the ink or varnish composition.

8. Aqueous ink or varnish composition according to any of the preceding claims, **characterized in that** the aqueous ink or varnish composition has a ratio of the at least one bonding agent to the at least one associative thickener of 5:1 to 20:1, in particular 5:1 to 15:1, preferably 5:1 to 10:1 based on the solids content, contained in the aqueous ink or varnish composition, of the at least one bonding agent and of the at least one associative thickener together.

9. Aqueous ink or varnish composition according to any of the preceding claims, **characterized in that** the at least one organic solvent is selected from the group consisting of 3-methoxy-3-methyl-1-butanol (MMB), methoxy butanol (MB), propylene glycol monomethyl ether (MP), glycol ether, 1-(2-hydroxyethyl)-2-pyrrolidone, N-methyl-2-pyrrolidone (NMP), N-ethyl-2-pyrrolidone (NEP), diethylene glycol monobutyl ether, diethylene glycol monoethyl ether, ethylene glycol, propylene glycol, DMSO, hexane-1,6-diol, pentane-1,5-diol, 2-pyrrolidone, glycerol and mixtures of at least two of the said organic solvents.

10. Aqueous ink or varnish composition according to any of the preceding claims, **characterized in that** the at least one organic solvent has a proportion of ≤ 20 % by wt., in particular 10 % by wt. to 20 % by wt., preferably 13 % by wt. to 18 % by wt. based on the total weight of the ink or varnish composition.

11. Aqueous ink or varnish composition according to any of the preceding claims, **characterized in that** the water has a proportion of ≥ 50 % by wt., in particular > 60 % by wt., preferably > 70 % by wt. based on the total weight of the ink or varnish composition.

12. Method for coating or printing, in particular digital printing, of a substrate, in which a substrate, in particular the surface of a substrate, is coated or printed, in particular digitally printed, with an aqueous ink or varnish composition according to any of the preceding claims.

13. Substrate, **characterized in that** the substrate is coated or printed, in particular digitally printed, at least partially with an aqueous ink or varnish composition according to any of claims 1 to 11.

14. ink set, having one or more ink compositions according to any of claims 1 to 11, the ink compositions differing from one another at least in respect of one colorant, in particular a dye and/or a pigment.

## Revendications

1. Composition aqueuse d'encre ou de peinture, notamment pour le revêtement ou l'impression d'un substrat, présentant
- au moins un agent épaississant,
- au moins un lient,
- au moins un solvant organique et
- de l'eau
sachant qu'il s'agit pour ledit au moins un agent épaississant d'au moins un épaississant associatif, sachant que ledit au moins un épaississant associatif est un polyacrylate à modification hydrophobe (HASE) et qu'il s'agit pour ledit au moins un liant d'un composé différant dudit au moins un épaississant associatif qui est sélectionné parmi le groupe constitué de polyacrylate, uréthane-acrylate, polyuréthane, caoutchouc acrylonitrile-butadiène (NBR), caoutchouc acrylonitrile-butadiène-styrène (ABS), méthacrylate-butadiène-styrène (MBS), méthyle-méthacrylate-butadiène-styrène et de mélanges d'au moins deux liants cités, sachant que la composition aqueuse d'encre ou de peinture présente un rapport entre ledit au moins un liant et ledit au moins un épaississant associatif correspondant à au moins 5:1, concernant le volume de solide dudit au moins un liant et dudit au moins un épaississant associatif, contenu dans la composition aqueuse d'encre ou de peinture.

2. Composition aqueuse d'encre ou de peinture selon la revendication 1, **caractérisée en ce que** la viscosité de la composition aqueuse d'encre ou de peinture augmente proportionnellement à la hausse de la part dudit au moins un épaississant associatif dans la composition aqueuse d'encre ou de peinture, notamment proportionnellement à la croissance d'au moins deux.

3. Composition aqueuse d'encre ou de peinture selon la revendication 1 ou 2, **caractérisée en ce qu'**il s'agit pour ledit au moins un épaississant associatif d'un copolymère qui est fabriqué par polymérisation d'un monomère anionique, d'un monomère hydrophobe et d'un monomère non ionique.

4. Composition aqueuse d'encre ou de peinture selon la revendication 3, **caractérisée en ce que**
- le monomère anionique est sélectionné parmi le groupe constitué d'acide acrylique, acide méthacrylique, acide crotonique, méthacrylate de phosphatoéthyle, acide 2-acrylamido-2-méthyl-propanesulfonique, vinylsulfonate de sodium, acide itaconique, acide fumarique, acide maléique, itaconate de monométhyle, fumarate de monométhyle, fumarate de monobutyle, anhydride maléique et de combinaisons d'au moins deux des monomères anioniques cités
et/ou
- le monomère hydrophobe est sélectionné parmi le groupe constitué d'ester tensioactif, acrylate d'éthyle en C₈-C₃₀-alkylphénoxy(éthylèneoxy)₆₋₁₀₀, méthacrylate d'éthyle en C₈-C₃₀-alkylphénoxy(éthylènoxy)₆₋₁₀₀, acrylate d'éthyle en C₈-C₃₀-alkoxy(éthylènoxy)₆₋₅₀, méthacrylate d'éthyle en C₈-C₃₀-alkoxy(éthylènoxy)₆₋₅₀, acrylate d'éthyle en C₈-C₃₀-alkyl-phénoxy, méthacrylate d'éthyle en C₈-C₃₀-alkylphénoxy, acrylate d'éthyle en C₈-C₃₀-alkoxy, méthacrylate d'éthyle en C₈-C₃₀-alkoxy, acrylate en C₁₈H₃₇(EO)₂₀, méthacrylate en C₁₈H₃₇(EO)₂₀, acrylate en C₂₀H₂₅(EO)₂₃; méthacrylate en C₂₀H₂₅(EO)₂₃ et de combinaisons d'au moins deux des monomères hydrophobes cités
et/ou
- le monomère non ionique est sélectionné parmi le groupe constitué d'ester alkylique en C1 à C7 de l'acide acrylique, ester alkylique en C1 à C7 d'acide méthacrylique, hydroxyalkylester en C2 à C7 d'acide acrylique, hydroxyalkylester en C2 à C7 d'acide méthacrylique, acrylate d'éthyle, méthacrylate d'éthyle, acrylate de méthyle, méthacrylate de méthyle, acrylate de 2-éthylhexyle, acrylate de butyle, méthacrylate de butyle, acrylate de 2-hydroxyéthyle, méthacrylate de 2-hydroxybutyle, styrène, vinyltoluène, t-butylstyrène, isopropénylstyrène, p-chlorostyrène, acétate de vinyle, butyrate de vinyle, caproate de vinyle, acrylonitrile, méthacrylonitrile, butadiène, isoprène, chlorure de vinyle, chlorure de vinylidène et de combinaisons d'au moins deux des monomères non ioniques cités.

5. Composition aqueuse d'encre ou de peinture selon une des revendications précédentes, **caractérisée en ce qu'**il s'agit pour ledit au moins un liant d'un polyacrylate avec une masse molaire ≥ 10 000 g/mol, notamment ≥ 10 000 g/mol à ≤ 1 000 000 g/mol, de préférence ≥ 10 000 g/mol à ≤ 200 000 g/mol, particulièrement de préférence ≥ 10 000 g/mol à ≤ 45 000 g/mol, en particulier ≥ 25 000 g/mol à ≤ 35 000 g/mol.

6. Composition aqueuse d'encre ou de peinture selon une des revendications précédentes, **caractérisée en ce qu'**il s'agit pour ledit au moins un liant d'un polyacrylate à partir d'un ester d'acide acrylique et au moins un comonomère, sachant que l'ester d'acide acrylique est sélectionné de préférence parmi le groupe constitué d'acrylate de méthyle, acrylate d'éthyle, acrylate de n-butyle, acrylate d'iso-butyle, acrylate de tert-butyle, acrylate de 2-éthylhexyle, acrylate de lauryle, acrylate de stéaryle, acrylate de benzyle et de combinaisons d'au moins deux des esters d'acide acrylique cités, et/ou que ledit au moins un comonomère est sélectionné de préférence parmi le groupe constitué d'acide méthacrylique, méthacrylate de méthyle, acrylate de butyle, acrylamide, styrène, acrylonitrile, acétate de vinyle, alcool vinylique, uréthane et des combinaisons d'au moins deux des comonomères cités.

7. Composition aqueuse d'encre ou de peinture selon une des revendications précédentes, **caractérisée en ce que** ledit au moins un épaississant associatif et ledit au moins un liant présentent ensemble une part de 0,1 % en poids à 10 % en poids, notamment 1 % en poids à 5,5 % en poids, de préférence 1,1 % en poids à 4,6 % en poids, par rapport au poids total de la composition d'encre ou de peinture.

8. Composition aqueuse d'encre ou de peinture selon une des revendications précédentes, **caractérisée en ce que** la composition aqueuse d'encre ou de peinture présente un rapport dudit au moins un liant par rapport audit au moins un épaississant associatif de 5:1 à 20:1, notamment de 5:1 à 15:1, de préférence 5:1 à 10:1 concernant le volume de solide dudit au moins un liant et dudit au moins un épaississant associatif, contenu dans la composition aqueuse d'encre ou de peinture.

9. Composition aqueuse d'encre ou de peinture selon une des revendications précédentes, **caractérisée en ce que** ledit au moins un solvant organique est sélectionné parmi le groupe constitué de 3-methoxy-3-methyl-1-butanol (MMB), méthoxybutanol (MB), éther de monométhyle du propylène-glycol (MP), éther de glycol, 1-(2-hydroxyéthyle)-2-pyrrolidone, N-méthyle-2-pyrrolidone (NMP), N-éthyl-2-pyrrolidone (NEP), monobutyléther de diéthylène glycol, monoéthyléther de diéthylène glycol, éthylène glycol, propylène glycol, DMSO, hexane-1,6-diol, pentane-1,5-diol, 2-pyrrolidone, glycérine et des mélanges d'au moins deux des solvants organiques cités.

10. Composition aqueuse d'encre ou de peinture selon une des revendications précédentes, **caractérisée en ce que** ledit au moins un solvant organique présente une part ≤ 20 % en poids, notamment 10 % en poids à 20 % en poids, de préférence 13 % en poids à 18 % en poids, par rapport au poids total de la composition d'encre ou de peinture.

11. Composition aqueuse d'encre ou de peinture selon une des revendications précédentes, **caractérisée en ce que** l'eau présente une part de ≥ 50 % en poids, notamment > 60 % en poids, de préférence > 70 % en poids, par rapport au poids total de la composition d'encre ou de peinture.

12. Procédé de revêtement ou d'impression, notamment d'impression numérique, d'un substrat lors duquel un substrat, notamment la surface d'un substrat est revêtue ou imprimée, notamment par impression numérique, avec une composition aqueuse d'encre ou de peinture selon une des revendications précédentes.

13. Substrat **caractérisé en ce que** le substrat est revêtu ou imprimé, notamment par impression numérique, au moins partiellement avec une composition aqueuse d'encre ou de peinture selon une des revendications 1 à 11.

14. Système d'encre, présentant une ou plusieurs compositions aqueuses d'encre ou de peinture selon une des revendications 1 à 11, sachant que les compositions d'encre se distinguent les unes des autres au moins en ce qui concerne un colorant, notamment une matière colorante et/ou un pigment.
